(19) Europäisches Patentamt
European Patent Office
Office européen des brevets

(11) **EP 4 734 018 A1**

(12) **EUROPEAN PATENT APPLICATION**
published in accordance with Art. 153(4) EPC

(43) Date of publication:
**29.04.2026 Bulletin 2026/18**

(21) Application number: **24824821.3**

(22) Date of filing: **19.06.2024**

(51) International Patent Classification (IPC):
**G06Q 10/00** *(2026.01)*  **G06Q 50/00** *(2024.01)*

(52) Cooperative Patent Classification (CPC):
**G06Q 10/00;** G06Q 50/00

(86) International application number:
**PCT/BR2024/050264**

(87) International publication number:
**WO 2024/259509 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.06.2023 BR 102023012720**

(71) Applicant: **Petroleo Brasileiro S.A. - PETROBRAS
20031912 Rio de Janeiro (BR)**

(72) Inventors:
• ZIMMERMANN SILVA, Vinicius
12223-900 São José dos Campos (SP) (BR)
• ALMEIDA LEOTE, Tiago
20231-030 Rio de Janeiro (BR)
• EBERT ETGES, Guilherme
29057-550 Vitória (ES) (BR)
• RAMOS, Marcos Leonardo
12223-900 São José dos Campos (SP) (BR)

(74) Representative: **Clarke, Modet y Cía., S.L.
C/ Suero de Quiñones 34-36
28002 Madrid (ES)**

(54) **METHODS FOR ESTIMATING AND MONITORING REALISTIC CONSUMPTION OF SPARE PARTS FOR INDUSTRIAL EQUIPMENT**

(57) The present invention relates to methods capable of realistically estimating spare parts consumption by target equipment (brand and model) and monitoring the actual consumption of this brand and model within a user-defined time window. The invention comprises: a main estimator function that predicts parts to be consumed with their related information, in a time window relative to the start of the operation of the equipment, based on consumption and processing history, resulting in average amounts likely to be consumed by type/identification or maximum amounts likely to be consumed; and an auxiliary consumption monitoring function, which is a view of the parts consumption/consumption profile of a given piece of equipment in a time window, which may be relative to the start of operation or absolute, in which, among other information, the consumption behavior of one or more pieces of equipment can be filtered, and consumption profiles can be compared between groups of equipment, in the same industrial plant or across different industrial plants. Along with the type/-identification of each part consumed in the results section of the estimator and monitoring functions, the following information is indicated: manufacturer, time of availability of each of the parts consumed, manufacturer numbers, material number, and optionally, historically practiced prices.

FIGURE 1

EP 4 734 018 A1

**Description**

**FIELD OF THE INVENTION**

The present invention falls within the technical field of oil and gas, more specifically, it has applications throughout the oil, natural gas, and energy industries. More specifically, it relates to a computer-implemented method for realistically estimating spare parts consumption for commissionable equipment within a user-defined time window for the areas of refining, E&P, G&E, maintenance planning, supply, engineering, operational reliability, and logistics.

**BACKGROUND OF THE INVENTION**

It is currently known that the inventory management process, especially the inventory of spare parts in the maintenance area of the oil and gas industry, has become a major challenge, causing several economic and environmental problems for the entire petroleum ecosystem.

Specifically, the lack of adequate information for defining spare parts throughout the oil, natural gas and energy industrial plant triggers some problems such as spare parts purchased for new equipment that are not actually used within the specific operating time, price increases, delays in the delivery of spare parts due to one-off purchases, a heavily demanded acquisition team in situations of emergency or unenforceable purchases, high inventory with high disposal value, impacts on the environment that generate fines and air pollution, in addition to the operational discontinuity of equipment due to the lack of spare parts. Currently, the most common practices for defining and selecting spare parts are: 1. Definition based on the own experience of the user, which typically differs; 2. The definition of the manufacturer is predefined, especially for the first two years of operation; and, sometimes, 3. Selection is based on failure rates and availability calculated using references obtained from the oil and gas industry, such as OREDA (offshore and onshore relyability data), that due to temperature, humidity issues, and other factors in the home countries of the participating companies, these rates, when they exist, are often not fully representative. A critical evaluation of all these methods shows significant potential for improvement, taking as a reference the significant numbers of production losses due to lack of spare parts in all major business units and the value of materials disposed of (purchased but not used) per year within the company. In general, it is known that production loss due to lack of spare parts only occurs when the main equipment fails, followed by the backup equipment. This reinforces the evidence that, significantly, the necessary part is not available when the equipment needs it.

Consequently, the industry of oil and gas supply chain logistics require assertiveness based on the speed and efficiency of the available tools and the team involved, to avoid costly operational bottlenecks and, consequently, environmental problems.

In view of this, and in order to solve the technical problems described above, the present invention aims to analyze the consumption profile of commissionable equipment, with an analytical view of the actual consumption in a given operational window of the equipment, making it possible to: identify which specific parts are likely to be effectively used in this operational window of the useful life of the equipment, based on the historical basis of the operation of that equipment and consumption of parts in the own industrial plant of the company, bringing more knowledge and control of the consumption profile of the equipment, allowing to know more quickly and clearly the need for spare parts (amount/identification of parts), according to the probable period of consumption from the start of operation of the main commissionable equipment, equipment with TAG (identification code according to the identification standard of the company) and certain locations (unit inserted within an industrial plant, or in the industrial plant, or in the well, or because it is a subsea application equipment, or inserted in a vessel, and the equipment(s) can be found at any address), and also that the same equipment can be applied to different environments of different operational parameters.

It is possible to identify that in practice, for example, the parts consumption list estimated by equipment manufacturers for the useful life of a piece of equipment differs from the actual use of that equipment, either by considering an excessive number of parts, by not considering parts that will be used, or even by including parts that will not be used, thus generating delays and unnecessary expenses for the company. It is also important to emphasize that the spare parts control currently in force in the oil and gas industry is based on so-called strategic and high-value spare parts in capital spares, which partially addresses the need but is insufficient when considering production losses caused by the lack of low-value spare parts, high-value disposal of industrial materials, and other data related to more common spare parts with a high impact on losses.

The computer-implemented methodology of the present invention was based on practical studies of the routine reality of spare parts management in the oil and gas industry. Thus, it was possible to identify that many of the tools used for spare parts control and management are limited by inaccurate information from manufacturers, limited and even divergent opinions among company experts, and central inventory control software that relies on the general history of parts output over the last 12 months or so, without focusing on the equipment receiving the part. With the present invention, it is possible to create a usage history based on the actual parts need of a piece of equipment within each year of its useful life, including everything from parts not defined in the list of the manufacturer to the amount of parts actually used, which in the vast majority, according to all cases analyzed, is less than that defined in the manual or official list of the manufacturer. The analytical methodology of the present invention can thus, for example, define within the actual consumption profile of the equipment, which parts are consumed within the defined time window and which part is consumed most frequently in a given period of the useful life of the equipment, carried out through a logical step that also generates an estimate of the values of spare parts that will be used during the third and fourth year of a piece of useful life of the equipment, for example.

Specifically, the consumption monitoring function of the monitoring method of the present invention seeks to provide complementary support to the estimating function of the estimating method of the present invention, in achieving the singular objective of providing more knowledge about the parts consumption profile of commissionable equipment. Consequently, with this knowledge accessible, fast and consistent for all interested parties, such as: supply, maintenance, operation, logistics, inventory, engineering, planning, among others, the consequent benefits are: the provision of realistic lists of spare parts required for the target equipment in the time period defined by the user; avoid or minimize the lack of spare parts required for equipment operation, equipment downtime and production shutdown, in addition to avoiding the emergency purchase of spare parts; avoid the purchase of unnecessary spare parts; optimize the supply of spare parts by reducing CAPEX and OPEX; increase transparency and scientific technical basis in the process of defining spare parts; reduction of indirect costs due to rework, shifting team focus, untimely procurement processes, frequent replanning, and lack of predictability.

**STATE OF THE ART**

In the state of the art, there are different methodologies implemented by computer programs to manage spare parts inventory. However, even using these tools available on the market to assist in the management of parts for maintenance of commissionable equipment, it is not possible to achieve assertive management that solves the aforementioned problem.

The patent document CN 115713169 A, for example, describes a method and apparatus for predicting the amount of spare parts, specifically, the method comprises: inputting data at a current time of each spare part of a product to be predicted into a pre-trained feature extraction model to obtain a first feature of each spare part determined by the feature extraction model, the first feature is used to characterize the current number of individual spare parts and the relationship between individual spare parts and other spare parts, as well as changes in the amount of spare parts at different times for a product to be predicted; spare part amount data for the specified time period after the current time determined by the prediction model to determine the spare part amount data for each spare part in a future period based on the first feature of each spare part determined by the feature extraction model from the historical data of each spare part.

However, the present invention differs from document CN 115713169 A, because although the present invention also uses an operational window of the equipment for the specified period of time as an analysis/forecast parameter, document CN 115713169 A is based on a feature extraction model from the historical data of each spare part, unlike the present invention which analyzes, within a given time window, the consumption history of the equipment through the actual consumption profile, which details the parts used, brand, model, including parts that were not defined in the manual of the manufacturer, but were used in that specific period of time of the useful life of the commissionable equipment, defined in the analysis.

The document CN 113487187 A describes a time-varying spare parts inventory configuration method based on level maintenance, which comprises the following steps: constructing a level maintenance and spare parts supply system, wherein the level maintenance comprises a base level and a base level, the spare part supply comprises a field replaceable unit LRU and a shop replaceable unit SRU, the maintenance time and repair amount of different failed units are independent of each other, and the spare parts demand rate obeys the Poisson distribution; establishing a time-varying demand rate model based on a level maintenance and spare parts supply system, wherein the time-varying demand rate model is established based on the availability and passivation effect of time-varying equipment; establishing a spare parts supply channel model and correcting the numerical probability distribution of each level of supply channels; construct benefit indices of spare parts guarantee rate and equipment availability based on a time-varying demand rate model and the numerical probability distribution of each level of supply channels; the spare parts guarantee rate and equipment availability benefit index are combined with the benefit index to construct a cost-effectiveness model; and establishing an optimization model and performing optimization configuration on spare parts based on the cost-effectiveness model.

Additionally, the document CN 113487187 A discloses a method comprising the steps of constructing a level maintenance and supplying spare parts system, wherein the level maintenance comprises a base level, the supply of spare parts comprises a field replaceable unit LRU and a workshop replaceable unit SRU, the maintenance time and repair amount of different failure units are independent of each other, and the spare parts demand rate obeys the Poisson distribution, when detecting that each guarantee point of the level maintenance and spare parts supply system is out of stock, following continuous supply.

However, the present invention differs from the document CN 113487187 A, since it focuses on the granularity of the commissionable equipment, basically on the view of actual consumption per equipment, that is, from an operational window of the equipment, wherein the time window is analyzed based on the start of the operation of the equipment, which can be from, for example, the start of operation to the second year, or from the second year to the fifth year, that is, any time window of all equipment of the same brand and model in operation in the industrial plant of the company. Therefore, it is possible to identify which specific parts a piece of equipment of the same brand and model used in a certain operational window, avoiding the purchase of parts that will not be used, that is, not failing to purchase necessary parts. Basically, in general terms, it avoids emergency or unenforceable purchases, damage to the environment, and reduces the use of human resources in purchasing spare parts.

The document CN 115689456 A describes a spare parts system and method based on automated maintenance tracking, comprising: a maintenance tracking module communicatively coupled to a server module for recording spare parts replacement and maintenance information of equipment, and uploading spare parts replacement and maintenance information to the server module; a spare parts analysis module connected to the server module for generating weighting factors corresponding to different spare parts based on information corresponding to different spare parts in the spare parts information base; a spare parts library output module, a spare parts library output module is connected to a spare parts analysis module, for generating and outputting a detailed spare parts library table, including the theoretical inventory amount corresponding to each spare part according to the weighting factors corresponding to the different spare parts.

Specifically, the document CN 115689456 A can accurately determine the type and number of spare parts that the spare parts library needs to store, reducing spare parts input costs and reducing downtime losses due to spare parts problems.

Therefore, there are technological differences between the present invention and the document CN 115689456 A, mainly regarding the parameters used in the functions of the present invention, such as a time window based on actual consumption history, in addition to allowing filtering of the consumption behavior of one or more pieces of equipment, making consumption comparisons between groups of equipment, the availability time of each consumed part, and the calculation of unit and total prices.

## BRIEF DESCRIPTION OF THE INVENTION

The present invention relates to computer-implemented methods for realistically estimating and monitoring spare parts consumption by target equipment within a user-defined time window.

Specifically, the present invention relates to a computer-implemented method for estimating realistic spare parts consumption for industrial equipment, comprising: (1) identifying and acquiring key data, wherein: (1a) a user must enter a TAG and then confirm a brand and model, or enter a manufacturer and then choose the brand and model; (1b) the user must enter the time window of interest, months and years after the start of operation of a piece of equipment; (1c) the user must decide whether or not to group said brand and model of equipment as a set, in which this brand and model are the main ones, wherein: if yes, (1.1 c) all equipment with a TAG within the main TAG in the SAP tree are selected and become part of the set equipment; if no, (1.2 c) it is not complemented in the initial characterization; (1d) searching all of the industrial plants of the company via database (datalake), identifying these pieces of equipment of this brand and model that have the operating time window requested; (1e) carrying out the survey of all spare parts that were consumed for each equipment of the same brand and model (TAGs/locations) defined by the user in the established time window; (2) processing understanding the user to decide between the probabilistic realistic view or the conservative realistic view: (2a) if the user decides between the probabilistic realistic view, the processing will highlight to be indicated in the estimated output list the average amount (m) with or without the value of +- 1 standard deviation s of each type of part consumed; or (2b) if the conservative realistic view is chosen, the largest amount of identical parts consumed by one of the equipment of the same brand and model identified within the group of equipment analyzed is highlighted to be indicated in the estimated output list; (3) correlating the parameters of interest and issuing an estimated realistic list, comprising: (3a) correlating a respective piece of data for each of the parts and amounts defined in the process step (2); (3b) optionally, historically checking the individual price charged and calculating the total price of the parts estimated for consumption by the selected equipment based on said data from step (3a); and (3c) issuing an estimated list of parts to be consumed by the equipment within the time window established by the user. In step (3b), preferably, said unit price is calculated according to the average price of the item in purchase orders over the last 5 years. In step (3a), said correlated data comprises a manufacturer name, a period for making the part available between the purchase order and the availability of the part to the requesting area, a manufacturer number, a material number, and optionally, a unit price and a reference currency. In step (3b), the calculation of the total price of the parts estimated for consumption of the selected equipment is performed, preferably, using data comprising unit prices and amounts.

Furthermore, the present invention also relates to a computer-implemented method for monitoring the realistic consumption of spare parts for industrial equipment, which comprises: (1) identifying and acquiring the main data, wherein: (1a) a user must enter a TAG and then confirm a brand and model, or enter a manufacturer and then choose the brand and model; (1b) the user must enter the time window of interest in absolute or relative mode, after the start of operation of an equipment; (1c) the user must decide whether or not to group said equipment brand and model as a set, in which this brand and model are main, wherein: if yes, (1.1 c) all equipment with TAG within the main TAG in the SAP tree are selected and become part of the set equipment, if not, (1.2 c) it is not complemented in the initial characterization; (1d) searching all databases of the industrial plants of the company via database tools (datalake), identifying these equipment of this brand and model that have the requested operating time window; (1e) surveying all spare parts that were consumed for each equipment of the same brand and model (TAGs/locations) defined by the user in the established time window; (2) defining filters, choosing a graphical representation, preferably represented in curves, and/or in the form of lists, containing search criteria for at least the locations and/or TAGs of interest; wherein: (2a) the user defines the type of information they wish to see in the output to represent the consumption data, such as: (2.1a) consumption in amount and accumulated over time; or (2.2a) consumption probability density; (2b) the user defines the location(s); (2c) presenting the search history through a list of all TAGs of the brand and model surveyed; (2d) the user confirms the default option with all the selected TAGs or one or some of them; (3) correlating the parameters of interest and issuing an estimated realistic list, comprising: (3a) correlating a respective piece of data for each of the parts and amounts defined in the process step (2); (3b) optionally checking historically the individual price charged and calculating the total price per type of part consumed by the selected equipment(s) based on said data from step (3a); and (3c) issuing the list of parts actually consumed by the equipment within the time window established by the user. In step (2b), the location(s) defined by the user preferably comprise: the entire industrial plant, and/or platforms (UEPs) and/or thermoelectric plants (UTEs), and/or refineries, or any industrial unit, or their location in their respective units in the industrial plant, or subsea equipment. In step (3a), preferably, said unit price is optionally indicated as an average of historical prices for the item in purchase orders over the last 5 years, or alternatively, another period of interest. In step (3a), said correlated data includes a manufacturer name, a period for the part to be made available between the purchase order and the availability of the part to the requesting area, a manufacturer number, a material number, a unit price, and a currency. In step (3b), the calculation for forming the total price of the estimated parts to be consumed by the selected equipment is preferably performed using data that includes unit prices and amounts.

Furthermore, in the preferred embodiment of the invention, the granularity of the commissionable equipment is a significant factor in the analytical function performed in the estimating function of the estimating method, in which the historical information on the demand for parts used, such as amount, description, dates of respective consumption and their relationships with each identified TAG of the defined equipment, and equipment maintenance orders are evaluated.

## BRIEF DESCRIPTION OF THE FIGURES

In order to complement this description and provide a better understanding of the features of the present invention, and in accordance with a preferred embodiment thereof, a set of figures is attached, exemplifying, but not limiting, its preferred embodiment.

Figure 1 illustrates how the communication of the elements involved in the computer-implemented estimation and monitoring methods occurs, in accordance with a preferred embodiment of the present invention.

Figure 2 shows a flowchart of the macro step (1) of identifying and acquiring the main data for the spare parts estimation function of the method for realistically estimating spare parts, in accordance with a preferred embodiment of the present invention.

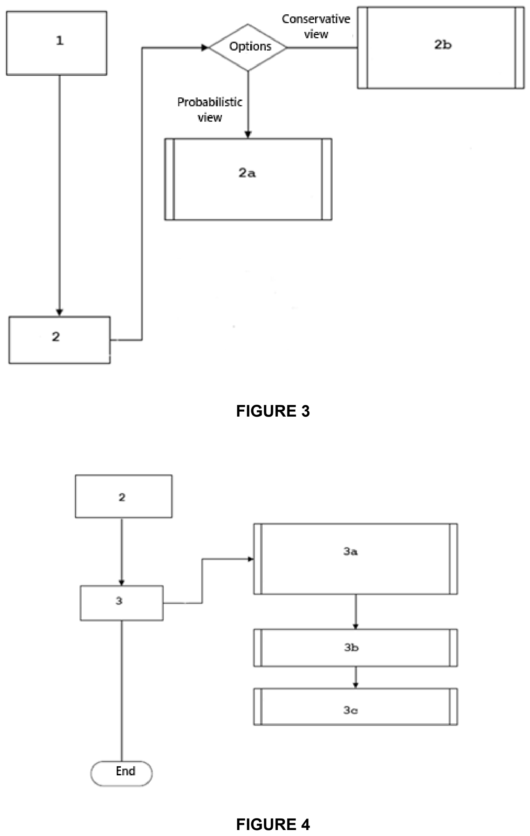

Figure 3 shows a flowchart of the macro step (2) of processing the spare parts estimation function of the method for realistically estimating spare parts, in accordance with a preferred embodiment of the present invention.

Figure 4 shows a flowchart of the macro step (3) of correlating parameters of interest and issuing the estimated realistic list of the spare parts estimator function of the method for realistically estimating spare parts, according to a preferred embodiment of the present invention.

Figure 5 shows a flowchart of the macro step (1) of identifying and acquiring the main data of the spare parts monitoring function of the monitoring method, according to a preferred embodiment of the present invention.

Figure 6 shows a flowchart of the macro step (2) of defining the filters, selecting curves, locations, and TAGs of interest, of the spare parts monitoring function of the monitoring method, according to a preferred embodiment of the present invention.

Figure 7 shows a flowchart of the macro step (3) of correlating parameters of interest and issuing the estimated realistic list of the monitoring method, according to a preferred embodiment of the present invention.

Figure 8 shows the probability density curve for 1 standard deviation, according to a preferred embodiment of the present invention.

Figure 9 shows the listing or report format in which the information is provided in step (3c) of the estimation method, according to a preferred embodiment of the present invention.

## DETAILED DESCRIPTION OF THE INVENTION

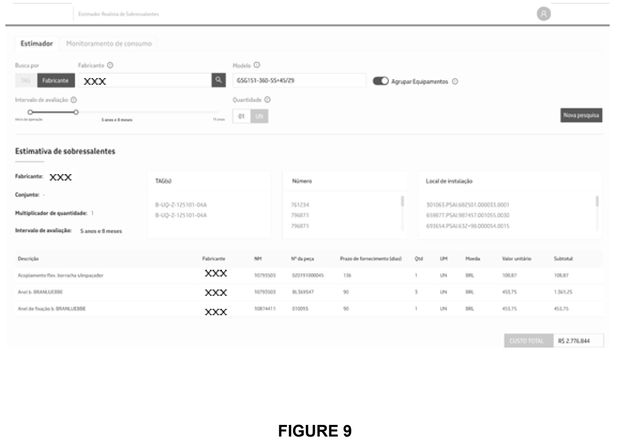

Broadly speaking, the main steps of this invention are as follows: identification of the target equipment and time window, which must be relative to the start of the operation of the equipment, and how many months and/or years after the start of the target operation of the equipment; with the brand and model of the equipment identified through more common information such as manufacturer, brand/model, or tag, brand/model, and whether the equipment of interest is a set or individual. If the interest is the motor pump set, for example, the combine function must be selected, which represents the set of equipment that operate together, as is the case with the motor pump set, to fulfill a specific function. In the motor pump set, for example, there is other equipment such as a tank, motor, and instruments that operate together to fulfill the pumping function. After identifying the equipment, a scan is carried out throughout the industrial plant of the company, such as offshore platforms, thermoelectric units, and refineries for equipment that fits this brand and model and the operating windows of interest. This scan is performed on the database (datalake), which contains data on maintenance orders, parts, dates, and actions performed on the target equipment, as well as other relevant information related to company processes such as purchasing, maintenance, and others. These datalake data are recorded in SAP and updated in the datalake. Additionally, the start date of operation for each piece of equipment in its respective location (TAG) for the group of equipment of the same brand and model are also recorded in this datalake. Using the user-defined time window, a survey of all spare parts consumed for each piece of equipment of the same brand and model within the established time window is performed. As previously mentioned, this survey is performed in the periodically updated database using process data recorded in SAP (datalake), which gathers all necessary consumption information and its relationship to the equipment in question, such as consumption date, target equipment, and amount and type of part consumed. At this point, the master data identification and acquisition stage is completed. The processing stage begins, and the user can then choose between more conservative and less conservative processing. The more conservative processing is based on a calculation that calculates the largest number of parts consumed in a given user-defined time window (99.7% probability, as shown in the attached flowchart). The less conservative processing is based on a calculation that calculates the average number of parts consumed in this same user-defined time window (68.0% probability, as shown in the attached flowchart). For example, a normal curve can be used to calculate the standard deviation, which can be indicated in the output as shown in the attached flowchart. Once the processing type is defined, the amount consumed of each part for each piece of equipment/ location within its time window is processed according to the defined formula (conservative realistic, median realistic, or probabilistic). Thus, the parts are described, and their amounts are estimated based on the actual amount consumed of each part by the equipment brand and model in its several locations within the company, within the time window of interest specified by the user. At this point, the processing stage is complete. The correlation stage begins with parameters of interest and the output of the estimated realistic list for the target equipment brand and model within the user-defined time window. For each of the parts and amounts defined in the processing stage, the respective manufacturer name, the period for part availability (lead time or the period between the purchase order and the availability of the part to the requesting area), manufacturer number, material number, and optionally a unit price and a reference currency are correlated. The unit price is calculated based on the average price of the item over the last five years. After correlating these parameters, the total price of the estimated parts for consumption of the reference equipment within the defined time window is calculated. This information is then made available in a list or report format, as shown in Figure 9.

The datalake gathers updated information on parts consumed by equipment and their consumption timeframes through several routine operations in the various work processes of the company, such as maintenance orders that specify the equipment targeted for maintenance and the planned action to be performed on it, including the parts to be replaced. These orders and all their information are stored in the datalake along with other records of all other operations occurring via the SAP system. The information is copied from SAP and forms a set of selected information with periodic updates. This set of periodic information forms the datalake used in the realistic spare parts estimation method.

In addition to the estimation function of the estimation method, which provides a view of the future, the consumption monitoring function is also available, which provides a view of equipment consumption in the past, according to a period defined by the user. This consumption monitoring function allows the user to specify, in addition to the target equipment (brand and model) and time window of interest, options for viewing actual consumption, such as a cumulative curve that shows the cumulative amounts consumed over the life of the selected brand and model. Multiple pieces of equipment of the same brand and model can be selected, allowing the user to select one, some, or all to be displayed on the desired curve. In addition, these consumption views for several pieces of equipment of the same brand and model are also available, as well as comparative consumption views between groups of pieces of equipment of the same brand and model by location (offshore platforms, thermal units, business units, etc.), and consumption views using several types of curves, such as cumulative curves and density and probability curves.

In a preferred embodiment, the method of the present invention does not require automatic removal from inventory for the analysis of equipment consumption, especially since most of the parts that leave inventory are not intended for servicing a piece of equipment. These parts can be sent to several destinations, such as the platform warehouse or thermal unit for a center that serves multiple platforms or a workshop. Otherwise, the part required by the equipment may have different origins, such as directly from the manufacturer, from the platform warehouse, from the workshop, etc. Therefore, the output of parts from stock and the control of this output is not very representative for the purpose of the present invention, the realistic spare parts estimation method, which, in short, seeks to know the consumption profile or need of the target equipment in the period of interest, based mainly on the estimating function and having the monitoring function as a complement.

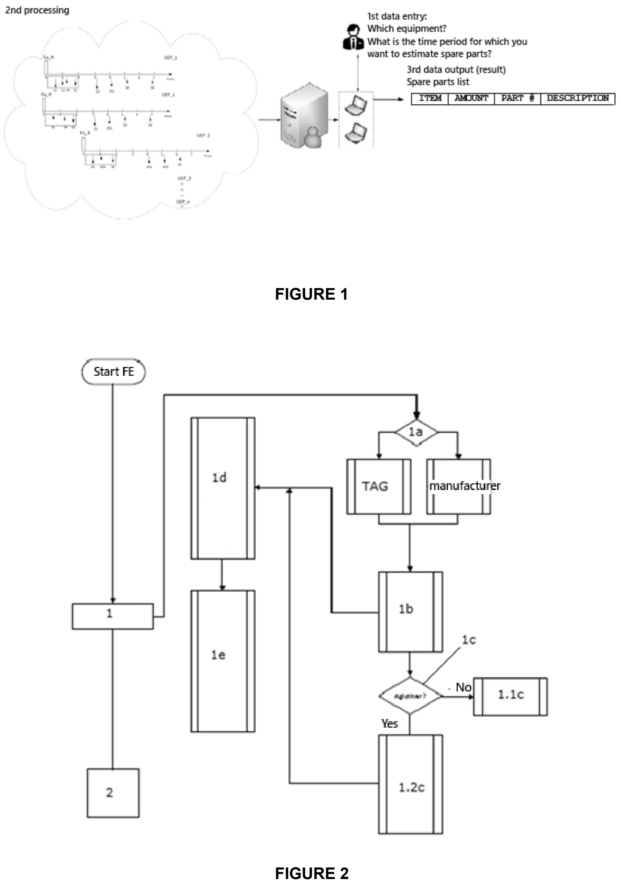

Furthermore, the computer-implemented methods of the present invention consist of the main consumption estimator function and the other serves as marginal support with the consumption monitoring function. The estimator function has 3 macro steps, which are detailed in substeps below. The first macro step is (1) identifying and acquiring the main data, which consists of the following steps detailed below as shown in Figure 2. In substep (1a) the user enters the TAG and then confirms the brand and model or the user enters the Manufacturer and then chooses the brand and model; then in (1b) the user enters the time window of interest, months and years after the start of equipment operation; in (1c) the user decides whether or not to group that equipment brand and model as a set in which this brand and model is the main one. If yes, all equipment with a TAG within the main TAG in the SAP tree are selected and become part of the set equipment. If not, it is not complemented in the initial characterization. In step (1d), a search is performed in all the industrial plant databases of the company via the database (datalake), as detailed above, to identify equipment of this brand and model that has the requested operating time window; in step (1e), a survey of all spare parts that were consumed for each piece of equipment of the same brand and model (all TAGs/locations) defined by the user within the established time window. At this point, the macro step (1) Identification and acquisition of main data is concluded and the processing step (2) begins, as follows: a substep (2a) in which the user decides between the probabilistic realistic view or the conservative realistic view. In substep (2.1a), if the probabilistic realistic view is chosen, the processing will highlight the average amount (m) and the value of +- 1 standard deviation s of each type of part consumed, variable X, by the equipment or equipment set within the defined time window, to be indicated in the estimated output list.

Example: Amount consumed of a specific part, Xi, in the defined time window, for each of the n pieces of equipment of the same brand and model identified according to the scan performed.

X1 = 3, X2 = 3, X3 = 5, X4 = 2, X5 = 0, X6 = 3

$$m = (X1 + X2 + X3 + X4 + X5 + X6) / 6 = 2.67$$

Where the whole number part will be rounded up and the decimal part will be zeroed.

(m) = 3.0

The standard deviation s is calculated considering the mean without rounding, using the following formula:

$$\sigma = \sqrt{\frac{\sum_{i=1}^{n}(X_i - \mu)^2}{n}}$$

s = 1.63

$\Sigma$: summation symbol. Indicates that all terms must be added, from the first position (I = 1) to position n

$X_i$: Amount consumed of a specific part at position i in the data set

m: Data arithmetic mean

n: Amount of data

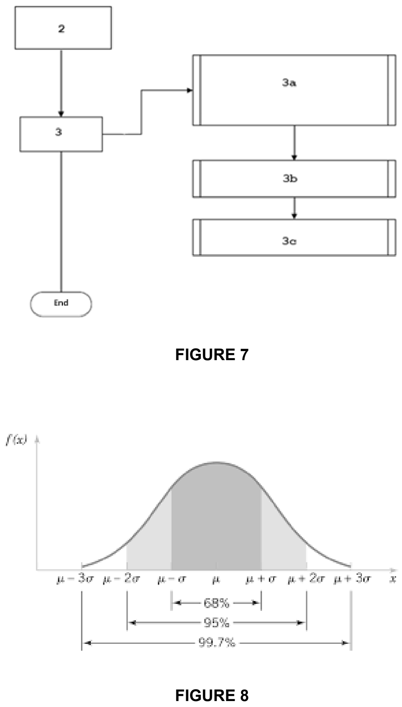

The estimated probability for this processing option is 68%, according to the probability density curve shown in Figure 8, for 1 standard deviation.

In Figure 8, there is: normal distribution (probability density function) probability density function:

$$f(x) = \frac{1}{\sqrt{2\pi\sigma^2}} e^{-\frac{1}{2}(\frac{x-\mu}{\sigma})^2} \quad -\infty < x < \infty$$

A result in the estimated list for this part would be 3.0 e +- 1.63. In substep (2b), if the user chooses the conservative realistic view, the largest number of identical parts consumed by one of the equipment of the same brand and model identified within the group of equipment surveyed is highlighted for presentation in the estimated output list.

Example: Amount consumed of a specific part, Xi, in the defined time window, for each of the n pieces of equipment of the same brand and model identified according to the scan performed.

X1 = 3, X2 = 3, X3 = 5, X4 = 2, X5 = 0, X6 = 3

A result in the estimated list for this part would be 5.0. The probability for this option is 99.7%, according to the probability density curve in Figure 8. At this point, the macro step (2) processing is completed and the macro step (3) correlation with parameters of interest and issuance of the estimated realistic list begins. This includes substep (3a), in which, for each of the parts and amounts defined in the processing step, the respective name of the manufacturer, the period for making the part available between the purchase order and the availability of the part to the requesting area, manufacturer number, material number, unit price, and currency are correlated. The unit price is calculated based on the average item price in purchase orders over the last 5 years. Then, in step (3b), once the unit prices and amounts are available, the individual price is verified historically and the total price of the estimated parts for consumption by the selected equipment is added up. In step (3c), the estimated list of parts to be consumed by the equipment within the time window established by the user is indicated as shown in the attached detailed flowchart.

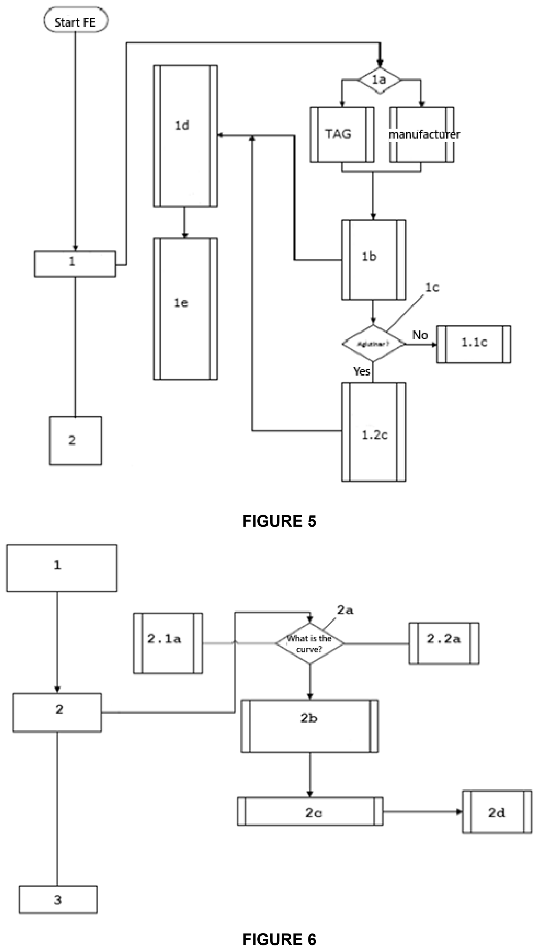

In addition, the detailed steps of the consumption monitoring function, viewing the past, are as shown in Figures 5, 6, and 7.

For the macro step (1) identification and acquisition of primary data, steps (1a) to (1e) are almost completely identical to the steps of the estimator function, with the only difference being the additional option for the user to enter the time window in absolute mode, in addition to the mode relative to the start of the operation, as is the case with the estimator function. Therefore, for ease of use, if the user has already filled in the input data, defined the equipment and the time window, in the estimator function, the data will already appear filled in, allowing editing of the fields of this data in the consumption monitoring function.

The differences begin in macro step (2) as shown below: (2) definition of filters, choosing a graphical representation, preferably represented in curves, and/or in the form of lists, containing search criteria for at least the locations and/or TAGs of interest, as detailed below. In step (2a) the user defines the type of information he wants to see in the output to represent consumption data, such as: (2.1a) consumption in amount and accumulated over time or (2.2a) consumption probability density. In step (2b) the user defines the location(s), such as: the entire industrial plant, and/or platforms (UEPs) and/or thermoelectric plants (UTEs) and/or refineries, or any industrial unit, or their location in their respective units in the industrial plant, or subsea equipment. Then, in step (2c) after the previous step, the search history is indicated through a list of all TAGs of the brand and model surveyed. In step (2d), the user confirms the default option with all or one or some of the selected TAGs. At this point, the macro step (2) defining filters is completed by choosing a graphical representation, preferably represented as curves, and/or in the form of lists, containing search criteria for at least the locations and/or TAGs of interest. The macro step (3) of correlating parameters of interest and issuing the estimated realistic list begins, similar to step (3) of the estimation method.

In other words, the methods of the present invention have two main functions: the first is to provide a realistic estimate of spare parts consumption by target equipment within a time window relative to the start of operation defined by the user; the second is to show the monitoring of the actual consumption of a given equipment (brand and model) in a given absolute or relative period defined by the user. As presented, the estimator function consists of presenting a consumption forecast over a period of time based on consumption history, while the monitoring function provides a view of the consumption of a given piece of equipment over a period of time. Among other information, it is possible to filter the consumption behavior of one or more pieces of equipment, compare consumption between groups of equipment, compare the availability time of each consumed part, and obtain unit and total prices.

## EXAMPLE OF EMBODIMENT / TESTS / RESULTS

In a preferred embodiment of the present invention, during a test, a significant difference was revealed between the results of the realistic spare parts estimator method of the present invention and the parts list indicated by the manufacturer for the consumption of four pumps during the first two years of operation. The main conclusions were that none of the parts indicated by the manufacturer were actually consumed during the three years of operation of the four pumps. The total value of the parts indicated by the manufacturer exceeds one million reais. If the company had purchased the indicated parts, it would have spent more than one million, two hundred and seventy thousand reais on CAPEX alone, in addition to running the risk of production shutdowns, increased purchasing hours, emergency processes and other problems already mentioned. Additionally, in another test similar to the one mentioned above, the resulting list of the invention was compared with the list of the manufacturer for two cranes, and the differences were again significant. Among the main conclusions, it is worth noting that, from the list provided by the manufacturer for the first two years of operation, only one part was actually used in the equipment. The total value of the list of the manufacturer exceeds one million reais, while the realistic list totals R$ 144,747.62.

Additionally, tests were conducted with the developed method, wherein problems were identified and solutions proposed as follows.

The test comparing the list of the manufacturer of two cranes for the two-year operating window from the start of operations with the realistic list estimated for the same two cranes for three years of operation led to the same conclusions as those obtained for the realistic estimate test for the four pumps, except that there was only one match, one item, between the list issued by the manufacturer and the list issued by the realistic estimator; that is, there was only one match for one crane arm.

Therefore, it was concluded that by better understanding the actual need for the equipment in advance, at any given time, the spare parts problems mentioned above can be avoided.

**Claims**

1. COMPUTER-IMPLEMENTED METHOD FOR ESTIMATING REALISTIC SPARE PARTS CONSUMPTION FOR INDUSTRIAL EQUIPMENT, **characterized by** comprising:

   (1) identifying and acquiring the main data, wherein:

   (1a) a user must enter a TAG and then confirm a brand and model, or enter a manufacturer and then select the brand and model;
   (1b) the user must enter the time window of interest, months and years after the start of operation of a piece of equipment;
   (1c) the user must decide whether or not to group the said equipment brand and model as a set, in which this brand and model are the main ones, wherein:

   if yes, (1.1 c) all equipment with a TAG within the main TAG in the SAP tree are selected and become part of the set of equipment;
   if no, (1.2 c) it is not supplemented in the initial characterization;

   (1d) scanning all of the industrial plants of the company via the database (datalake), identifying equipment of this brand and model that has the requested operating time window;
   (1e) surveying all spare parts consumed for each piece of equipment of the same brand and model (TAGs/locations) defined by the user within the established time window;

   (2) processing, allowing the user to decide between the probabilistic realistic view or the conservative realistic view:

   (2a) if the user chooses the probabilistic realistic view, the processing will highlight the average amount (m) with or without the value of +- 1 standard deviation s for each type of part consumed for presentation in the estimated output list; or
   (2b) if the conservative realistic view is chosen, the largest amount of identical parts consumed by one of the pieces of equipment of the same brand and model identified within the analyzed equipment group will be highlighted for presentation in the estimated output list;

   (3) correlating the parameters of interest and issuing an estimated realistic list, comprising:

   (3a) correlating a respective piece of data for each of the parts and amounts defined in the processing step (2);
   (3b) optionally, historically checking the individual price charged and calculating the total price of the estimated parts for consumption by the selected equipment based on said data from step (3a); and
   (3c) issuing an estimated list of parts to be consumed by the equipment within the time window established by the user.

2. METHOD, according to claim 1, **characterized in that** in step (3b), preferably, said unit price is calculated based on the average price of the item in purchase orders over the last 5 years.

3. METHOD, according to claim 1, **characterized in that** in step (3a) said correlated data includes a manufacturer name, a period for part availability between the purchase order and the availability of the part to the requesting area, a manufacturer number, a material number, and optionally, a unit price and a reference currency.

4. METHOD, according to claim 1, **characterized in that** in step (3b) the calculation of the total price of the parts estimated for consumption of the selected equipment is performed, preferably, using data that includes unit prices and amounts.

5. COMPUTER-IMPLEMENTED METHOD FOR MONITORING THE REALISTIC CONSUMPTION OF SPARE PARTS FOR INDUSTRIAL EQUIPMENT, **characterized** **by** comprising:

(1) identifying and acquiring the main data, wherein:

(1a) a user must enter a TAG and then confirm a brand and model, or enter a manufacturer and then select the brand and model;
(1b) the user must enter the time window of interest in absolute or relative mode, after a piece of equipment starts operating;
(1c) the user must decide whether or not to group the aforementioned equipment brand and model as a set, in which this brand and model are the main ones, wherein:

if yes, (1.1 c) all equipment with a TAG within the main TAG in the SAP tree are selected and become part of the set;
if no, (1.2 c) it is not supplemented in the initial characterization;

(1d) searching all the industrial plant of databases of the company using database tools (datalake), identifying equipment of this brand and model that has the required operating time window;
(1e) surveying all spare parts consumed for each piece of equipment of the same brand and model (TAGs/ locations) defined by the user within the established time window;

(2) defining filters, choosing a graphical representation, preferably represented in curves, and/or in the form of lists, containing search criteria for at least the locations and/or TAGs of interest; wherein:

(2a) the user defines the type of information he wishes to see in the output to represent consumption data, such as:

(2.1a) consumption in amount and accumulated over time; or
(2.2a) consumption probability density;

(2b) the user defines the location(s);
(2c) displaying the search history through a list of all TAGs of the selected brand and model;
(2d) the user confirms the default option with all TAGs selected or one or some of them;

(3) correlating the parameters of interest and issuing a realistic estimated list, comprising:

(3a) correlating a respective data point for each of the parts and amounts defined in the processing step (2);
(3b) optionally, checking the individual price historically and calculating the total price of the estimated parts for consumption by the selected equipment based on the data from step (3a); and
(3c) issuing an estimated list of parts to be consumed by the equipment within the time window established by the user.

6. METHOD, according to claim 5, **characterized in that** in step (2b), the user-defined location(s) preferably comprise: the entire industrial plant, and/or platforms (UEPs) and/or thermoelectric plants (UTEs), and/or refineries, or any industrial unit, or their location in their respective units in the industrial plant, or subsea equipment.

7. METHOD, according to claim 5, **characterized in that** in step (3a), preferably, said unit price is optionally indicated as an average of historically practiced prices for the item in purchase orders over the last 5 years, or alternatively, another period of interest.

8. METHOD, according to claim 5, **characterized in that** in step (3a), said correlated data includes a manufacturer name, a period for the part to be available between the purchase order and the availability of the part to the requesting area, a manufacturer number, a material number, a unit price, and a currency.

9. METHOD, according to claim 5, **characterized in that** in step (3b) the composition of the calculation to form the total price of the estimated parts to be consumed by the selected equipment is carried out, preferably, using data that include unit prices and amounts.

**FIGURE 1**

**FIGURE 2**

**FIGURE 3**

**FIGURE 4**

**FIGURE 5**

**FIGURE 6**

**FIGURE 7**

**FIGURE 8**

**FIGURE 9**

## INTERNATIONAL SEARCH REPORT

| International application No. |
| --- |
| **PCT/BR2024/050264** |

| | |
| --- | --- |
| **A. CLASSIFICATION OF SUBJECT MATTER** | |
| **G06Q 10/00**(2023.01)i; G06Q 50/00(2024.01)<br>CPC: G06Q10/00; G06Q50/00 | |
| According to International Patent Classification (IPC) or to both national classification and IPC | |

**B. FIELDS SEARCHED**

Minimum documentation searched (classification system followed by classification symbols)

G06Q10/00; G06Q50/00
CPC: G06Q10/00; G06Q50/00

Documentation searched other than minimum documentation to the extent that such documents are included in the fields searched

Base de dados INPI-BR

Electronic data base consulted during the international search (name of data base and, where practicable, search terms used)

Derwent Index Innovation; Google Patents

**C. DOCUMENTS CONSIDERED TO BE RELEVANT**

| Category* | Citation of document, with indication, where appropriate, of the relevant passages | Relevant to claim No. |
| --- | --- | --- |
| X | US 9058569 B2 (IBM [US]) 16 June 2015 (2015-06-16)<br>The whole document | 1 - 9 |
| X | US 20140278713 A1 (ORACLE INTERNATIONAL CORPORATION) 18 September 2014 (2014-09-18)<br>The whole document | 1 - 9 |
| X | US 20210108501 A1 (Seadrill Americas Inc.) 15 April 2021 (2021-04-15)<br>The whole document | 1 - 9 |
| X | US 20160110677 A1 (Utopia Global, Inc.) 21 April 2016 (2016-04-21)<br>The whole document | 1 - 9 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 September 2024** | **27 September 2024** |

| Name and mailing address of the ISA/BR | Authorized officer |
| --- | --- |
| **National Institute of Industrial Property (Brazil)**<br>**Rua Mayrink Veiga 9, 20º andar, Centro Rio de Janeiro RJ – CEP 20.090-910**<br>**Brazil** | **Fábio Vieira Batista de Nazaré** |
| Telephone No. **(55 21) 3037-3742, 3037-3984** | Telephone No. **+55 21 3037 4528 - 3037 3319** |

Form PCT/ISA/210 (second sheet) (July 2022)

## INTERNATIONAL SEARCH REPORT
### Information on patent family members

International application No.

**PCT/BR2024/050264**

| Patent document cited in search report | | | Publication date (day/month/year) | Patent family member(s) | | | Publication date (day/month/year) |
|---|---|---|---|---|---|---|---|
| US | 9058569 | B2 | 16 June 2015 | US | 2014163936 | A1 | 12 June 2014 |
| | | | | US | 2014163935 | A1 | 12 June 2014 |
| | | | | US | 9058568 | B2 | 16 June 2015 |
| | | | | WO | 2014092838 | A1 | 19 June 2014 |
| US | 20140278713 | A1 | 18 September 2014 | NONE | | | |
| US | 20210108501 | A1 | 15 April 2021 | NONE | | | |
| US | 20160110677 | A1 | 21 April 2016 | NONE | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 115713169 A
- CN 113487187 A
- CN 115689456 A